Europäisches Patentamt

European Patent Office

Office européen des brevets

(19)

(11)  EP 0 989 784 B1

(12)  EUROPÄISCHE PATENTSCHRIFT

(45) Veröffentlichungstag und Bekanntmachung des
Hinweises auf die Patenterteilung:
**25.09.2002  Patentblatt 2002/39**

(51) Int Cl.⁷: **H05B 37/00**

(21) Anmeldenummer: **99114917.0**

(22) Anmeldetag: **30.07.1999**

(54) **Schaltung sowie Kalibrierungs- und Betriebsverfahren eines PWM-Schaltnetzteils für Niedervoltlampen**

Circuit with calibration and operating method of a PWM power supply for low voltage lamps

Circuit et procédé pour le calibrage et l'opération des alimentations MLI pour lampes à baisse voltage

(84) Benannte Vertragsstaaten:
**BE DE ES FR GB IT NL**

(30) Priorität: **23.09.1998  DE 19843678**

(43) Veröffentlichungstag der Anmeldung:
**29.03.2000  Patentblatt 2000/13**

(73) Patentinhaber: **Patent-Treuhand-Gesellschaft für elektrische Glühlampen mbH
81543 München (DE)**

(72) Erfinder: **Raiser, Franz, Dr.
80689 München (DE)**

(56) Entgegenhaltungen:
WO-A-92/16085          DE-A- 19 613 703
US-A- 5 416 387        US-A- 5 517 086
US-A- 5 568 041        US-A- 5 786 671
US-A- 5 806 055

**Beschreibung**

Die vorliegende Erfindung betrifft ein Verfahren zur Bereitstellung eines Ausgangssignals mit einem gewünschten Wert einer Kenngröße am Ausgang eines Schaltnetzteils, wobei mit dem Ausgang des Schaltnetzteils mindestens eine Niedervoltlampe verbunden ist, sowie eine Schaltung zur Durchführung des Verfahrens.

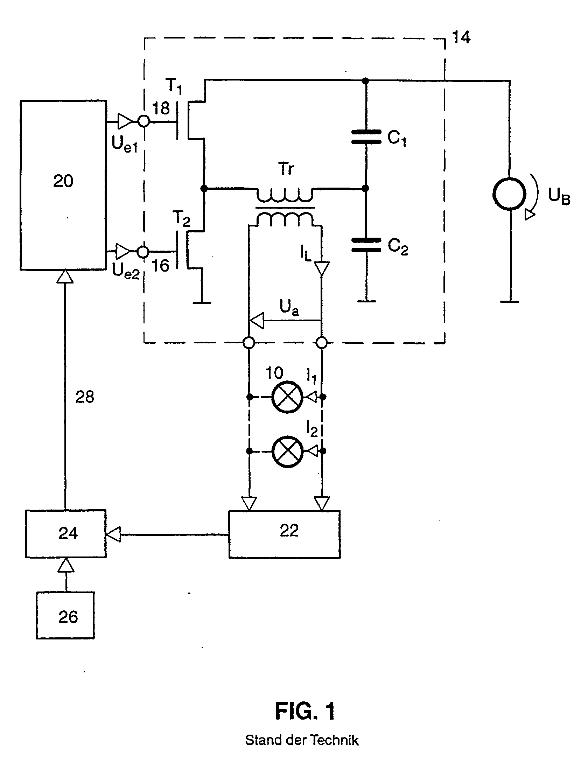

Die Problematik der vorliegenden Erfindung soll am Beispiel der in Figur 1 gezeigten aus dem Stand der Technik bekannten Schaltungsanordnung beschrieben werden. Zum Betreiben von Niedervoltlampen, beispielsweise Halogenglühlampen 10, 12, werden diese einzeln oder in Parallelanordnung an die Ausgangsklemmen eines Schaltnetzteils 14 angeschlossen. Das Schaltnetzteil 14 ist mit einer Betriebsspannung $U_B$, beispielsweise der Netzspannung, verbunden. Die Eingänge 16,18 des Schaltnetzteils 14 sind mit einer Ansteuerschaltung 20 verbunden, die im Vergleich zur Netzfrequenz hochfrequente, gegenphasige, pulsweitenmodulierte Rechtecksignale $U_{e1}$, $U_{e2}$ am ihren Ausgängen bereitstellt. Die Ansteuerschaltung könnte auch nur eines der beiden Signale $U_{e1}$ oder $U_{e2}$ an das Schaltnetzteil 14 bereitstellen, wobei dann im Schaltnetzteil ein Bauteil vorgesehen sein müßte, um aus dem Signal $U_{e1}$ oder $U_{e2}$ das jeweils andere zu erzeugen. Eine typische Frequenz der Rechtecksignale liegt bei 50 kHz. Das beispielhaft dargestellte Schaltnetzteil 14 umfaßt eine Halbbrücke bestehend aus den Transistoren $T_1$ und $T_2$, zwei Kondensatoren $C_1$ und $C_2$ sowie einem Transformator Tr, dessen Primärseite einerseits mit einem Punkt zwischen den beiden Transistoren $T_1$, $T_2$ und andererseits mit einem Punkt zwischen den beiden Kondensatoren $C_1$, $C_2$ verbunden ist. Die Sekundärseite des Transformators bildet den Ausgang des Schaltnetzteils 14.

Der Transformator ist beispielsweise dimensioniert für eine Maximalleistung von 300 Watt. Je nachdem, wie viele Lampen zwischen die Ausgangsklemmen des Schaltnetzteils parallelgeschaltet werden bzw. für welche Leistung die entsprechende Lampe bzw. die entsprechenden Lampen ausgelegt sind, müssen die Eingangssignale 16,18 verändert werden, um einen gewünschten Effektivwert $U_{aeff}$ der Ausgangsspannung $U_a$, wie von der zugehörigen Lampenspezifikation gefordert, am Ausgang des Schaltnetzteils 14 bereitzustellen. Bereits geringe Abweichungen können zu einer beträchtlichen Verringerung der Lebensdauer der Lampe bzw. der Lampen führen.

Gemäß der Lehre des Standes der Technik wird zum Einstellen des gewünschten Effektivwerts $U_{aeff}$ der Ausgangsspannung $U_a$ der momentane Effektivwert $U_{aeff}$ der Ausgangsspannung $U_a$ in einer Erfassungsvorrichtung 22 erfaßt und in einem Vergleicher 23 mit einem vorgegebenen Referenzwert 26 verglichen. In Abhängigkeit des Vergleichsergebnisses wird die Ansteuerschaltung 20 mit einem Steuersignal 28 beaufschlagt, was dazu führt, daß in der Ansteuerschaltung 20 die Pulsweite des Ausgangssignals der Ansteuerschaltung derart modifiziert wird, daß sich der Effektivwert $U_{aeff}$ der Ausgangsspannung $U_a$ des Schaltnetzteils 14 dem Referenzwert 26 annähert. Die Regelung der Ausgangsspannung $U_a$ über die Rückkoppelschleife mit den Bauteilen 22, 24, 26 erfolgt so lange bis der Effektivwert $U_{aeff}$ der Ausgangsspannung $U_a$ dem Referenzwert 26 entspricht. Bei Änderungen der Betriebsspannung $U_B$ und damit einhergehenden Änderungen des Effektivwerts $U_{aeff}$ der Ausgangsspannung $U_a$ wird in entsprechender Weise über die erwähnte Rückkoppelschleife auf den Referenzwert hingeregelt.

Die Lösung gemäß dem Stand der Technik hat zwei entscheidende Nachteile: Erstens ist die Form der Ausgangsspannung $U_a$ abhängig von der zwischen den Ausgangsklemmen des Schaltnetzteils angeschlossenen Last, d. h. eine Änderung der Last führt nicht nur zu einer Änderung des Effektivwerts $U_{aeff}$ der Ausgangsspannung $U_a$, sondern auch zu einer Änderung der Signalform. Daher genügt es zur Ermittlung des Effektivwerts $U_{aeff}$ der Ausgangsspannung $U_a$ nicht, lediglich die Amplitude der Ausgangsspannung $U_a$ zu erfassen. Vielmehr muß eine echte Effektivwertmessung durchgeführt werden. In Anbetracht der hohen Frequenzanteile in der Ausgangsspannung $U_a$ bedeutet dies einen erheblichen Schaltungsaufwand.

Zweitens schreiben die Sicherheitsanforderungen bezüglich der Berührbarkeit der Ausgangsklemmen des Schaltnetzteils (SELV) eine Potentialtrennung zwischen Netzspannung und Ausgangsspannung $U_a$ vor (4kV-Test). Die Rückkoppelschleife zwischen Ausgangsspannung $U_a$ und Ansteuerschaltung 20 müßte ebenfalls diesen Sicherheitsanforderungen genügen und daher mit einem Transformator oder einem Optokoppler realisiert werden. Dies würde ebenfalls zusätzlichen Schaltungsaufwand bedeuten.

Der vorliegenden Erfindung liegt daher die Aufgabe zugrunde, ein Verfahren zur Verfügung zu stellen, mit dem, unabhängig von Schwankungen der Betriebsspannung $U_B$ und unabhängig von der Anzahl der angeschlossenen Halogenglühlampen bzw. der Leistung der angeschlossenen Halogenglühlampe(n) am Ausgang des Schaltnetzteils die Ausgangsspannung $U_a$ mit dem gewünschten Effektivwert $U_{aeff}$ bei möglichst geringem Schaltungsaufwand bereitgestellt wird.

Es ist weiterhin Aufgabe der vorliegenden Erfindung, eine Schaltung zum Durchführen eines derartigen Verfahrens zur Verfügung zu stellen.

Diese Aufgaben werden gelöst durch ein Verfahren mit den Merkmalen gemäß Anspruch bzw. eine Schaltung mit den Merkmalen gemäß Anspruch 10.

Der besondere Vorteil der erfindungsgemäßen Lösung liegt darin, daß die Abhängigkeit des Effektivwerts $U_{aeff}$ der Ausgangsspannung $U_a$ von der Betriebsspannung $U_B$, dem Laststrom $I_L$ und der Pulsweite PW des Eingangssignals bzw. der Eingangssignale des Schaltnetzteils, d. h. die Aufzeichnung des Kennlinienfeldes, werksseitig mit hochwertigen Geräten vorgenommen werden kann und die ermittelten Abhängigkeiten in einem billigen Speicherbaustein, der jedem Schaltnetzteil hinzugefügt wird, abgelegt werden können. Ein weiterer wichtiger Vorteil liegt darin, daß als Eingangsgröße des Rückkopplungspfads nicht die Ausgangsspannung $U_a$ des Schaltnetzteils verwendet wird. Hierdurch entfällt der Schaltungsaufwand für die Einhaltung der oben erwähnten Sicherheitsanforderungen für den Rückkopplungspfad.

In einer besonders vorteilhaften Ausführungsform der vorliegenden Erfindung wird bei einem Schaltnetzteil mit mindestens zwei abwechselnd leitenden Transistoren zur Bestimmung der Amplitude des Laststroms $I_L$ die Spannung ausgewertet, die an einem Widerstand im Ausgangskreis eines dieser mindestens zwei Transistoren abfällt, während dieser Transistor leitet.

In einer noch günstigeren Realisierung wird zur Bestimmung der Amplitude des Laststroms $I_L$ die Spannung ausgewertet, die an den Ausgangsanschlüssen eines dieser mindestens zwei Transistoren aufgrund des Innenwiderstands dieses Transistors abfällt, während dieser Transistor leitet.

Weitere vorteilhafte Weiterbildungen der Erfindung sind in den Unteransprüchen definiert.

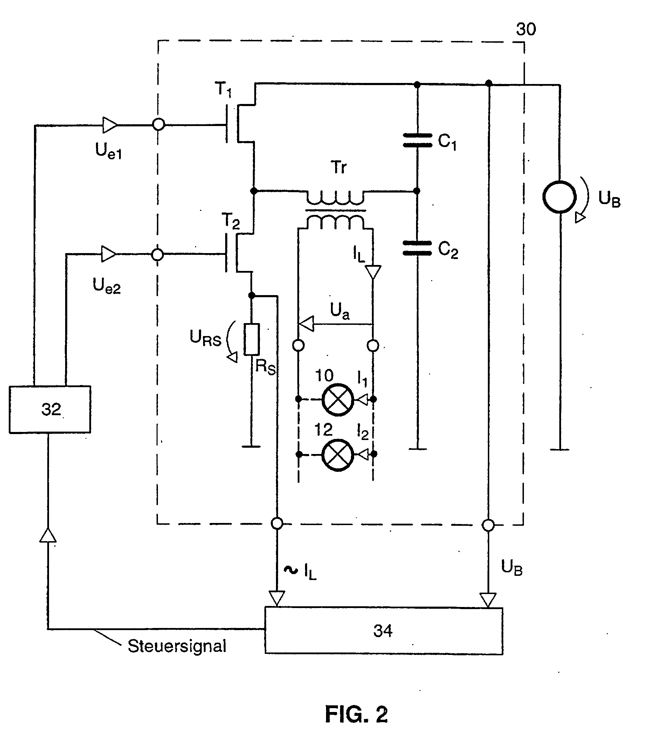

Ein Ausführungsbeispiel wird im folgenden unter Hinweis auf die Figur 2 näher beschrieben.

In Figur 2 ist eine Schaltung dargestellt, mit der Halogenglühlampen 10, 12, etc. betrieben werden können und zwar unabhängig von der Leistung der Halogenglühlampen 10, 12 und der Anzahl der Halogenglühlampen. Das Schaltnetzteil 30 verfügt beispielhaft über die bereits im Zusammenhang mit Figur 1 erwähnten Bauteile, nämlich zwei Transistoren $T_1$, $T_2$, zwei Kondensatoren $C_1$, $C_2$ und einen Transformator Tr, der, wie im Stand der Technik gemäß Figur 1, mit den Transistoren, den Kondensatoren und den Halogenglühlampen verbunden ist. Das Schaltnetzteil 30 ist überdies in bekannter Weise mit einer Betriebsspannung $U_B$ verbunden. Die Funktion des in erfinderischer Weise im Schaltnetzteil 30 zusätzlich zwischen Transistor $T_2$ und Masse angeordneten Widerstands $R_s$ wird nachfolgend erklärt.

Der Erfindung liegt die Erkenntnis zugrunde, daß die Ausgangsspannung $U_a$ am Ausgang des Schaltnetzteils, insbesondere deren Effektivwert $U_{aeff}$, hauptsächlich von zwei Größen beeinflußt wird, nämlich der an das Schaltnetzteil angelegten Betriebsspannung $U_B$, die im allgemeinen die Netzspannung ist, sowie dem Laststrom $I_L$, d. h. dem Strom, der der Summe der Ströme $I_1$, $I_2$ durch alle am Ausgang des Schaltnetzteils angeschlossenen Glühlampen 10,12, etc. entspricht. Dieser Strom $I_L$ ändert sich nicht nur in Abhängigkeit der Anzahl der am Ausgang des Schaltnetzteils angeschlossenen Glühlampen, sondern auch in Abhängigkeit von der Leistung der angeschlossenen Glühlampe(n). Weiterhin ist von Bedeutung, daß eine Halogenglühlampe im Betrieb - anders als beim Einschalten - im wesentlichen einen nur ohmschen Widerstand aufweist.

In einem werksseitig auszuführenden Kalibriervorgang wird die für einen gewünschten Effektivwert $U_{aeff}$ der Ausgangsspannung $U_a$ nötige Pulsweite PW eines von einer Ansteuerschaltung 32 an das Schaltnetzteil zu liefernden Signals bzw. zu liefernder Signale $U_{e1}$, $U_{e2}$ in Abhängigkeit von der Betriebsspannung $U_B$ und vom Laststrom $I_L$ aufgenommen und in einem Kennlinienfeld KF abgelegt, d. h.

$$PW\ (U_{aeff} = \text{konst.}) = KF\ (U_B, I_L)$$

Hierzu werden Wertequadrupel ermittelt, d. h. für unterschiedliche Werte von $U_B$ und $I_L$ wird der zugehörige Wert der Pulsweite PW ermittelt, um den gewünschten Effektivwert $U_{aeff}$ der Ausgangsspannung $U_a$ zu erhalten. Falls ein Speicher 34 für unterschiedlichste Effektivwerte $U_{aeff}$ der Ausgangsspannung $U_a$ eingesetzt werden soll, kann dieser Vorgang für diese unterschiedlichen Werte des Effektivwerts $U_{aeff}$ von $U_a$ wiederholt werden. Der Effektivwert $U_{aeff}$ wird jeweils unter Verwendung eines HF-Effektivwert-Voltmeters, vorzugsweise mit einer Bandbreite von mindestens 2 MHz gemessen. Bei der Aufnahme des Kennlinienfelds kann als Maßgabe für die Auflösung dienen, daß der Effektivwert $U_{aeff}$ der Ausgangsspannung $U_a$ beim Betrieb von Halogenglühlampen vom vorgegebenen Spezifikationswert um maximal +/- 0,2 Volt abweichen darf. Die ermittelten Abhängigkeiten dieser vier Parameter untereinander, d. h. die Punkte des Kennlinienfelds, werden in einem Speicher 34 abgelegt, der zu jedem Schaltnetzteil hinzugefügt wird. Als Eingangssignal des Speichers 34 dient zum einen die Betriebsspannung $U_B$ bzw. ein Signal, das der Betriebsspannung $U_B$ proportional ist, sowie ein Signal, das dem Laststrom $I_L$ proportional ist. In dem in Figur 2 dargestellten Ausführungsbeispiel wird ein dem Laststrom proportionales Signal dadurch gewonnen, daß zwischen dem Transistor $T_2$ und Masse ein Widerstand $R_s$ eingefügt wird, und die daran abfallende Spannung $U_{RS}$ an den Speicher 34 angelegt wird. Die Spannung $U_{RS}$ ist proportional zum Laststrom $I_L$. Es ist darauf zu achten, daß im Speicher 34 das dem Laststrom proportionale Signal nur zu einem Zeitpunkt ausgewertet wird, zu dem der Transistor $T_2$ leitet. Im Speicher 34 werden die Werte der Betriebsspannung $U_B$ und des Laststroms $I_L$, gegebenenfalls unter Berücksichtigung von Proportionalitätsfaktoren, ermittelt und die Pulsweite, die in Anbetracht der ermittelten Werte von $I_L$ und $U_B$ zum gewünschten Effektivwert $U_{aeff}$ der Ausgangsspannung $U_a$ führen, ermittelt. Der gewünschte Effektivwert $U_{aeff}$ der Ausgangsspannung $U_a$ kann fest vorgegeben sein, wobei in diesem Fall bei der Kalibrierung die Aufnahme des Kennlinienfelds für unterschiedliche $U_{aeff}$ = konst. entfällt, kann jedoch auch dem Speicher 34 zusätzlich zugeführt werden.

Der im Speicher 34 ermittelte Wert für die Pulsweite wird dem Treiber 32 zugeführt, wobei der Treiber 32 an seinem Ausgang bzw. seinen Ausgängen Ausgangssignale mit entsprechend geänderter Pulsweite dem Schaltnetzteil 30 bereitstellt.

Um auf Änderungen von Betriebsparameters, z.B. der Betriebsspannung $U_B$, zu reagieren, d.h. die Bereitsstellung eines konstanten Effektivwerts $U_{aeff}$ der Ausgangsspannung $U_a$ auch bei Änderung von Betriebsparametern sicherzustellen bzw. um auf einen konstanten Wert des Effektivwerts $U_{aeff}$ der Betriebsspannung $U_a$ zu regeln, kann der oben erwähnte Regelzyklus in vorbestimmten zeitlichen Abständen wiederholt werden.

In nicht dargestellten weiteren Ausführungsformen kann eine dem Laststrom $I_L$ proportionale Größe beispielsweise dadurch ermittelt werden, daß die an einem der beiden Transistoren in leitendem Zustand an seinem Innenwiderstand abfallende Spannung ausgewertet wird, beispielsweise bei Realisierung der Transistoren $T_1$, $T_2$ als Feldeffekttransistoren, die aufgrund des Innenwiderstands $R_{DSon}$ abfallende Spannung. Andere Möglichkeiten zur Messung des Stroms sind bekannt, beispielsweise unter Verwendung eines Stromwandlers, der anstelle des Widerstands $R_s$ eingeschleift wird bzw. unter Verwendung eines Hall-Elements.

Das in Figur 2 dargestellte Schaltnetzteil 30 umfaßt eine Halbbrückenschaltung. Der Erfindungsgedanke ist ohne weiteres bei einem Schaltnetzteil mit Vollbrückenschaltung anwendbar. In Erweiterung des oben dargestellten Erfindungsgedankens sind auch Varianten denkbar, bei denen nicht nur eine Kenngröße des Eingangssignals des Schaltnetzteils variiert wird, oben beispielsweise die Pulsweite, sondern auch Varianten, bei denen beispielsweise zwei oder mehrere Parameter des Eingangssignals verändert werden, beispielsweise Pulsweite und Frequenz.

Wird der Speicher 34 als Microcontroller realisiert, so kann dieser weitere Funktionen übernehmen, beispielsweise eine Sicherheitsabschaltung, falls die Betriebsspannung und/oder der Strom $I_L$ vorgegebene Schwellenwerte überschreiten. Er kann auch dazu dienen, einen Softstart der Halogenglühlampen herbeizuführen, d. h. eine sogenannte In-Rush-Current-Reduction, bei der die Pulsweite nach und nach auf den gewünschten Wert gefahren wird. Ferner kann er für die Steuerung der zeitlichen Wiederholung des Regelzyklus verwendet werden.

Zum Betreiben herkömmlicher Halogenglühlampen genügt die Aufnahme des Kennlinienfelds pro Schaltnetzteilserie. Für Präzisionsgeräte kann auch eine Aufnahme des Kennlinienfelds pro Schaltnetzteil in Betracht kommen.

## Patentansprüche

1. Verfahren zur Bereitstellung eines Ausgangssignals ($U_a$) mit einem gewünschten Wert einer Kenngröße ($U_{aeff}$) am Ausgang eines Schaltnetzteils, wobei mit dem Ausgang des Schaltnetzteils mindestens eine Niedervoltlampe verbunden ist, ein Laststrom ($I_L$) der Summe der durch alle Niedervoltlampen fließenden Ströme ($I_1$, $I_2$) entspricht, das Schaltnetzteil eingangsseitig mit einem Eingangssignal ($U_{e1}$, $U_{e2}$) angesteuert wird, das mindestens eine veränderbare Kenngröße (PW) aufweist, und das Schaltnetzteil mit einer Betriebsspannung ($U_B$) verbunden ist, **gekennzeichnet durch** folgende Schritte:

   a. in einem Kalibriervorgang:

   a1. Bestimmen des für einen gewünschten Wert der Kenngröße ($U_{aeff}$) des Ausgangssignals ($U_a$) nötigen Werts der mindestens einen veränderbaren Kenngröße (PW) des Eingangssignals ($U_{e1}$, $U_{e2}$) in Abhängigkeit von der Betriebsspannung $U_B$ und vom Laststrom $I_L$ ;
   a2. Speichern der in Schritt a1) ermittelten Abhängigkeit in einem Speicher;

   b. im Betrieb:

   b1. Bestimmen von Kenngrößen des Laststroms ($I_L$) und der Betriebsspannung ($U_B$);
   b2. Auslesen des Werts bzw. der Werte der mindestens einen veränderbaren Kenngröße (PW) des Eingangssignals ($U_{e1}$, $U_{e2}$) in Abhängigkeit der in Schritt b1) bestimmten Werte von Laststrom ($I_L$) und Betriebsspannung ($U_B$) aus dem Speicher, die mit dem gewünschten Wert der Kenngröße ($U_{aeff}$) des Ausgangssignals ($U_a$) korrespondieren; und
   b3. Verändern der mindestens einen veränderbaren Kenngröße (PW) des Eingangssignals ($U_{e1}$, $U_{e2}$) auf den bzw. die im Schritt b2) aus dem Speicher ausgelesenen Wert(e).

2. Verfahren nach Anspruch 1, **dadurch gekennzeichnet,** **daß** in Schritt a1) der Laststrom ($I_L$), die Betriebsspannung ($U_B$) und die Kenngröße ($U_{aeff}$) des Ausgangssignals ($U_a$) auf vorbestimmte Werte variiert werden und der korrespondierende Wert bzw. die korrespondierenden Werte der mindestens einen variablen Kenngröße (PW) des Eingangssignals ($U_{e1}$, $U_{e2}$) bestimmt werden, um ein Kennfeld zu erzeugen.

3. Verfahren nach Anspruch oder 2, **dadurch gekennzeichnet,** **daß** in Schritt b1) die Momentanwerte der Kenngrößen von Betriebsspannung ($U_B$) und Laststrom ($I_L$) bestimmt werden.

4. Verfahren nach einem der vorhergehenden Ansprüche,
   **dadurch gekennzeichnet,**
   **daß** in Schritt b1) der momentane Effektivwert der Betriebsspannung ($U_B$) bestimmt wird.

5. Verfahren nach einem der vorhergehenden Ansprüche,
   **dadurch gekennzeichnet,**
   **daß** in Schritt b1) die momentane Amplitude des Laststroms ($I_L$) bestimmt wird.

6. Verfahren nach Anspruch 5,
   **dadurch gekennzeichnet,**
   **daß** das Schaltnetzteil mindestens zwei abwechselnd leitende Transistoren ($T_1$, $T_2$) umfaßt und die Amplitude des Laststroms ($I_L$) ermittelt wird durch:

   - Auswerten der Spannung ($U_{Rs}$), die an einem Widerstand ($R_s$) im Ausgangskreis eines dieser mindestens zwei Transistoren ($T_1$; $T_2$) abfällt, während dieser Transistor leitet; oder
   - Auswerten der Spannung, die an den Ausgangsanschlüssen eines dieser mindestens zwei Transistoren ($T_1$; $T_2$) aufgrund des Innenwiderstands ($R_{DSon}$) dieses Transistors abfällt, während dieser Transistor leitet; oder
   - Verwenden eines Stromwandlers; oder
   - Verwenden eines Hallelements.

7. Verfahren nach einem der vorhergehenden Ansprüche,
   **dadurch gekennzeichnet,**
   **daß** das Eingangssignal ($U_{e1}$, $U_{e2}$) ein pulsweitenmoduliertes Signal und die mindestens eine veränderbare Kenngröße des Eingangssignals die Pulsweite ist.

8. Verfahren nach einem der vorhergehenden Ansprüche,
   **dadurch gekennzeichnet,**
   **daß** das Ausgangssignal eine Spannung ($U_a$) und die Kenngröße des Ausgangssignals der Effektivwert dieser Spannung ($U_a$) ist.

9. Verfahren nach einem der vorhergehenden Ansprüche,
   **dadurch gekennzeichnet,**
   **daß** die Schritte b1) bis b3) im Betrieb in vorbestimmten zeitlichen Abständen wiederholt werden.

10. Schaltung zum Treiben mindestens einer Niedervoltlampe umfassend:

    ein Schaltnetzteil, an dessen Ausgang ein Aus-

gangssignal ($U_a$) mit einem gewünschten Wert einer veränderbaren Kenngröße ($U_{aeff}$) zum Betreiben der mindestens einen Niedervoltlampe bereitstellbar ist,
eine Ansteuerschaltung, die mit dem Eingang des Schaltnetzteils verbunden ist und ein Eingangssignal ($U_{e1}$; $U_{e2}$) mit mindestens einer veränderbaren Kenngröße (PW) an das Schaltnetzteil bereitstellt,
Vorrichtungen zum Bestimmen von Kenngrößen der Betriebsspannung ($U_B$) und des Laststroms ($I_L$), wobei der Laststrom ($I_L$) die Summe der im Betrieb durch alle Niedervoltlampen fließenden Ströme ($I_1$, $I_2$) ist,
**gekennzeichnet durch** einen Speicher, in dem der für einen gewünschten Wert der Kenngröße ($U_{aeff}$) des Ausgangssignals ($U_a$) nötige Wert der mindestens einen veränderbaren Kenngröße (PW) des Eingangssignals ($U_{e1}$, $U_{e2}$) in Abhängigkeit von der Betriebsspannung $U_B$ und vom Laststrom $I_L$ abgelegt ist, wobei der Eingang des Speichers mit den Ausgängen der Vorrichtungen verbunden sind.

11. Schaltung nach Anspruch 10,
    **dadurch gekennzeichnet,**
    **daß** die Vorrichtungen zum Bestimmen die Momentanwerte der Kenngrößen von Betriebsspannung ($U_B$) und Laststrom ($I_L$) bestimmen.

12. Schaltung nach Anspruch 9 oder 10,
    **dadurch gekennzeichnet,**
    **daß** die Vorrichtungen zum Bestimmen den momentanen Effektivwert der Betriebsspannung ($U_B$) und die momentane Amplitude des Laststroms ($I_L$) bestimmen.

13. Schaltung nach einem der Ansprüche 9 bis 12,
    **dadurch gekennzeichnet,**
    **daß** das Schaltnetzteil mindestens zwei abwechselnd leitende Transistoren ($T_1$, $T_2$) umfaßt und zum Bestimmen des Laststroms vorgesehen ist:

    - ein Widerstand ($R_s$) im Ausgangskreis eines dieser mindestens zwei Transistoren; oder
    - ein Stromwandler; oder
    - ein Hallelement.

14. Schaltung nach einem der Ansprüche 9 bis 13,
    **dadurch gekennzeichnet,**
    **daß** das von der Ansteuerschaltung an das Schaltnetzteil angelegte Eingangssignal ($U_{e1}$, $U_{e2}$) ein pulsweitenmoduliertes Signal und die mindestens eine veränderbare Kenngröße des Eingangssignals die Pulsweite ist.

15. Schaltung nach einem der Ansprüche 9 bis 14,
    **dadurch gekennzeichnet,**

**daß** das Ausgangssignal eine Spannung ($U_a$) und die Kenngröße des Ausgangssignals der Effektivwert dieser Spannung ($U_a$) ist.

**Claims**

1. Method for providing an output signal ($U_a$) having a desired value of a characteristic quantity ($U_{arms}$) at the output of a switched-mode power supply unit, where at least one low-voltage lamp is connected to the output of the switched-mode power supply unit, a load current ($I_L$) corresponds to the sum of the currents ($I_1$, $I_2$) flowing through all the low-voltage lamps, on the input side the switched-mode power supply unit is driven by an input signal ($U_{e1}$, $U_{e2}$) having at least one variable characteristic quantity (PW), and the switched-mode power supply unit is connected to an operating voltage ($U_B$), **characterized by** the following steps:

    a. in a calibration operation:

        a1. determination of the value of the at least one variable characteristic quantity (PW) of the input signal ($U_{e1}$, $U_{e2}$), which value is required for a desired value of the characteristic quantity ($U_{arms}$) of the output signal ($U_a$), in dependence on the operating voltage $U_B$ and on the load current ($I_L$).
        a2. storage of the dependence determined in step a1) in a memory;

    b. during operation:

        b1. determination of characteristic quantities of the load current ($I_L$) and of the operating voltage ($U_B$);
        b2. reading of the value or values of the at least one variable characteristic quantity (PW) of the input signal ($U_{e1}$, $U_{e2}$) in dependence on the values of load current ($I_L$) and operating voltage ($U_B$) determined in step b1) from the memory, which correspond to the desired value of the characteristic quantity ($U_{arms}$) of the output signal ($U_a$); and
        b3. varying of the at least one variable characteristic quantity (PW) of the input signal ($U_{e1}$, $U_{e2}$) to the value(s) read from the memory in step b2).

2. Method according to Claim 1, **characterized** **in that** in step a1) the load current ($I_L$), the operating voltage ($U_B$) and the characteristic quantity ($U_{arms}$) of the output signal ($U_a$) are varied to predetermined values and the corresponding value or the corresponding values of the at least one variable characteristic quantity (PW) of the input signal ($U_{e1}$, $U_{e2}$) is or are determined in order to produce a family of characteristic curves.

3. Method according to Claim 1 or 2, **characterized** **in that** in step b1) the instantaneous values of the characteristic quantities of operating voltage ($U_B$) and load current ($I_L$) are determined.

4. Method according to one of the preceding claims, **characterized** **in that** in step b1) the instantaneous root-mean-square value of the operating voltage ($U_B$) is determined.

5. Method according to one of the preceding claims, **characterized** **in that** in step b1) the instantaneous amplitude of the load current ($I_L$) is determined.

6. Method according to Claim 5, **characterized** **in that** the switched-mode power supply unit comprises at least two transistor ($T_1$, $T_2$), which are in the on state alternately, and the amplitude of the load current ($I_L$) is determined by:

    - evaluation of the voltage ($U_{Rs}$) dropped across a resistor ($R_S$) in the output circuit of one of these at least two transistors ($T_1$; $T_2$) while this transistor is in the on state; or
    - evaluation of the voltage dropped across the output terminals of one of these at least two transistors ($T_1$; $T_2$) on account of the internal resistance ($R_{DSon}$) of this transistor while this transistor is in the on state; or
    - use of a current transformer; or
    - use of a Hall-effect element.

7. Method according to one of the preceding claims, **characterized** **in that** the input signal ($U_{e1}$, $U_{e2}$) is a pulse width-modulated signal and the at least one variable characteristic quantity of the input signal is the pulse width.

8. Method according to one of the preceding claims, **characterized** **in that** the output signal is a voltage ($U_a$) and the characteristic quantity of the output signal is the root-mean-square value of this voltage ($U_a$).

9. Method according to one of the preceding claims, **characterized** **in that** steps b1) to b3) are repeated at predetermined time intervals during operation.

**10.** Circuit for driving at least one low-voltage lamp, comprising:

a switched-mode power supply unit, at the output of which it is possible to provide an output signal ($U_a$) having a desired value of a variable characteristic quantity ($U_{arms}$) for operating the at least one low-voltage lamp,
a drive circuit, which is connected to the input of the switched-mode power supply unit and provides an input signal ($U_{e1}$; $U_{e2}$) having at least one variable characteristic quantity (PW) to the switched-mode power supply unit,
devices for determining characteristic quantities of the operating voltage ($U_B$) and of the load current ($I_L$), the load current ($I_L$) being the sum of the currents ($I_1$, $I_2$) flowing through all the low-voltage lamps during operation,

**characterized by** a memory, in which is stored the value of the at least one variable characteristic quantity (PW) of the input signal ($U_{e1}$; $U_{e2}$), which value is required for a desired value of the characteristic quantity ($U_{arms}$) of the output signal ($U_a$), in dependence on the operating voltage $U_B$ and on the load current ($I_L$), the input of the memory being connected to the outputs of the devices.

**11.** Circuit according to Claim 10, **characterized in that** the determining devices determine the instantaneous values of the characteristic quantities of the operating voltage ($U_B$) and the load current ($I_L$).

**12.** Circuit according to Claim 9 or 10, **characterized in that** the determining devices determine the instantaneous root-mean-square value of the operating voltage ($U_B$) and the instantaneous amplitude of the load current ($I_L$).

**13.** Circuit according to one of Claims 9 to 12, **characterized in that** the switched-mode power supply unit comprises at least two transistor ($T_1$, $T_2$), which are in the on state alternately, and, in order to determine the load current, provision is made of the following:

- a resistor ($R_S$) in the output circuit of one of these at least two transistors; or
- a current transformer; or
- a Hall-effect element.

**14.** Circuit according to one of Claims 9 to 13, **characterized in that** the input signal ($U_{e1}$, $U_{e2}$) applied to the switched-mode power supply unit by the drive circuit is a pulse width-modulated signal and the at least one variable characteristic quantity of the input signal is the pulse width.

**15.** Circuit according to one of Claims 9 to 14, **characterized in that** the output signal is a voltage ($U_a$) and the characteristic quantity of the output signal is the root-mean-square value of this voltage ($U_a$).

**Revendications**

**1.** Procédé pour fournir un signal de sortie ($U_a$) aYANT une valeur souhaitée d'une grandeur caractéristique ($U_{aeff}$) à la sortie d'une alimentation à découpage, au moins une lampe à basse tension étant reliée à la sortie de l'alimentation à découpage, un courant de charge ($I_L$) correspondant à la somme des courants ($I_1$, $I_2$) passant par les lampes à basse tension, l'alimentation à découpage étant commandée côté entrée PAR un signal d'entrée ($U_{e1}$, $U_{e2}$) qui comporte au moins une grandeur caractéristique modifiable (PW) et l'alimentation à découpage étant reliée à une tension de fonctionnement ($U_B$), **caractérisé par** les étapes suivantes :

a. dans une opération de calibrage :

a1. déterminer la valeur, nécessaire à une valeur souhaitée de la grandeur caractéristique ($U_{aeff}$) du signal de sortie ($U_a$), de la ou des grandeurs caractéristiques modifiables (PW) du signal d'entrée ($U_{e1}$, $U_{e2}$) en fonction de la tension de fonctionnement ($U_B$) et du courant de charge ($I_L$) ;
a2. mémoriser la dépendance, déterminée à l'étape a1), dans une mémoire ;

b. lors du fonctionnement :

b1. déterminer des grandeurs caractéristiques du courant de charge ($I_L$) et de la tension de fonctionnement ($U_B$) ;
b2. lire dans la mémoire la ou les valeurs de la ou des grandeurs caractéristiques modifiables (PW) du signal d'entrée ($U_{e1}$, $U_{e2}$) en fonction des valeurs, déterminées à l'étape b1), du courant de charge ($I_L$) et de la tension de fonctionnement ($U_B$), lesquelles valeurs correspondent à la valeur souhaitée de la grandeur caractéristique ($U_{aeff}$) du signal de sortie ($U_a$) ; et
b3. modifier la ou les grandeurs caractéristiques modifiables (PW) du signal d'entrée ($U_{e1}$, $U_{e2}$) en lui ou leur donnant la ou les valeurs lues dans la mémoire à l'étape b2).

**2.** Procédé selon la revendication 1,
**caractérisé par le fait que**, à l'étape a1), on modifie le courant de charge ($I_L$), la tension de fonctionnement ($U_B$) et la grandeur caractéristique ($U_{aeff}$) du signal de sortie ($U_a$) en leur donnant des valeurs prédéterminées et on détermine la ou les valeurs correspondantes de la ou des grandeurs caractéristiques modifiables (PW) du signal d'entrée ($U_{e1}$, $U_{e2}$) afin de produire un champ de caractéristiques.

**3.** Procédé selon la revendication 1 ou 2,
**caractérisé par le fait que**, à l'étape b1), on détermine les valeurs instantanées des grandeurs caractéristiques de la tension de fonctionnement ($U_B$) et du courant de charge ($I_L$).

**4.** Procédé selon l'une des revendications précédentes,
**caractérisé par le fait que**, à l'étape b1), on détermine la valeur réelle instantanée de la tension de fonctionnement ($U_B$).

**5.** Procédé selon l'une des revendications précédentes,
**caractérisé par le fait que**, à l'étape b1), on détermine l'amplitude instantanée du courant de charge ($I_L$).

**6.** Procédé selon la revendication 5,
**caractérisé par le fait que** l'alimentation à découpage comprend au moins deux transistors ($T_1$, $T_2$) qui sont conducteurs en alternance et qu'on détermine l'amplitude du courant de charge ($I_L$) par :

- l'évaluation de la tension ($U_{Rs}$) qui chute à une résistance ($R_S$) dans le circuit de sortie de l'un de ces deux transistors au moins ($T_1$ ; $T_2$) pendant que ce transistor est conducteur ; ou
- l'évaluation de la tension qui chute aux bornes de sortie de l'un de ces deux transistors au moins ($T_1$ ; $T_2$) en raison de la résistance interne ($R_{DSon}$) de ce transistor pendant que ce transistor est conducteur ; ou
- l'utilisation d'un convertisseur de courant ; ou
- l'utilisation d'un élément à effet Hall.

**7.** Procédé selon l'une des revendications précédentes,
**caractérisé par le fait que** le signal d'entrée ($U_{e1}$, $U_{e2}$) est un signal modulé en largeur d'impulsion et qu'une grandeur caractéristique modifiable du signal d'entrée est la largeur d'impulsion.

**8.** Procédé selon l'une des revendications précédentes,
**caractérisé par le fait que** le signal de sortie est une tension ($U_a$) et que la grandeur caractéristique du signal de sortie est la valeur réelle de cette tension ($U_a$).

**9.** Procédé selon l'une des revendications précédentes,
**caractérisé par le fait que**, lors du fonctionnement, on répète les étapes b1 à b3) à des intervalles de temps prédéterminés.

**10.** Circuit destiné à faire fonctionner au moins une lampe à basse tension et comprenant :

une alimentation à découpage à la sortie de laquelle peut être fourni un signal de sortie ($U_a$) avec une valeur souhaitée d'une grandeur caractéristique modifiable ($U_{aeff}$) pour faire fonctionner la ou les lampes à basse tension,
un circuit de commande qui est relié à l'entrée de l'alimentation à découpage et qui fournit à l'alimentation à découpage un signal d'entrée ($U_{e1}$ ; $U_{e2}$) avec au moins une grandeur caractéristique modifiable (PW),
des dispositifs pour déterminer des grandeurs caractéristiques de la tension de fonctionnement ($U_B$) et du courant de charge ($I_L$), le courant de charge ($I_L$) étant la somme des courants ($I_1$, $I_2$) passant par les lampes à basse tension lors du fonctionnement,

**caractérisé par** une mémoire dans laquelle est mémorisée la valeur, nécessaire à une valeur souhaitée de la grandeur caractéristique ($U_{aeff}$) du signal de sortie ($U_a$), de la ou des grandeurs caractéristiques modifiables (PW) du signal d'entrée ($U_{e1}$, $U_{e2}$) en fonction de la tension de fonctionnement ($U_B$) et du courant de charge ($I_L$), les entrées de la mémoire étant reliées aux sorties des dispositifs.

**11.** Circuit selon la revendication 10,
**caractérisé par le fait que** les dispositifs destinés à la détermination déterminent les valeurs instantanées des grandeurs caractéristiques de la tension de fonctionnement ($U_B$) et du courant de charge ($I_L$).

**12.** Circuit selon la revendication 9 ou 10,
**caractérisé par le fait que** les dispositifs destinés à la détermination déterminent la valeur réelle instantanée de la tension de fonctionnement ($U_B$) et l'amplitude instantanée du courant de charge ($I_L$).

**13.** Circuit selon l'une des revendications 9 à 12,
**caractérisé par le fait que** l'alimentation à découpage comprend au moins deux transistors ($T_1$, $T_2$) qui sont conducteurs en alternance et qu'il est prévu pour la détermination du courant de charge :

- une résistance ($R_S$) dans le circuit de sortie de l'un de ces deux transistors au moins ; ou
- un convertisseur de courant ; ou
- un élément à effet Hall.

14. Circuit selon l'une des revendications 9 à 13, **caractérisé par le fait que** le signal d'entrée ($U_{e1}$, $U_{e2}$) appliqué par le circuit de commande à l'alimentation à découpage est un signal modulé en largeur d'impulsion et qu'une grandeur caractéristique modifiable du signal d'entrée est la largeur d'impulsion.

15. Circuit selon l'une des revendications 9 à 14, **caractérisé par le fait que** le signal de sortie est une tension ($U_a$) et que la grandeur caractéristique du signal de sortie est la valeur réelle de cette tension ($U_a$).

## FIG. 1

Stand der Technik

**FIG. 2**